# EUROPEAN PATENT APPLICATION

(11) **EP 1 150 547 A1**
(43) Date of publication of application: **31.10.2001**
(21) Application number: 00966510.0
(22) Date of filing: 16.10.2000
(51) Int. Cl.: H04R 23/00, H04R 3/00, H04M 1/00, H04M 1/06

(54) **OPTICAL MICROPHONE PORTABLE TELEPHONE**

(30) Priority: 15.10.1999 JP 29421999
(71) Applicant: Phone-Or Ltd, Or-Yehudah 60252 (IL); Paritsky, Alexander, 60252 Or-Yehuda (IL)
(72) Inventor: KOTS, Alexander Phone-Or Ltd., 60252 Or-Yahuda (IL); KOBAYASHI, Okihiro Kenwood Corporation, Shibuya-ku, Tokyo 150-0043 (JP); MIYAHARA, Nobuhiro Kenwood Corporation, Shibuya-ku, Tokyo 150-0043 (JP); HATTORI, Yutaka Kenwood Corporation, Shibuya-ku, Tokyo 150-0043 (JP)
(74) Representative: Pratt, David Martin
(86) International application number: JP0007163
(87) International publication number: WO0128287

(57) **Abstract**

An optical microphone element comprising a diaphragm (31) vibrating with sound pressure, a case (40) containing the diaphragm (31) and having first and second openings (38, 39) made in symmetic positions and facing the diaphragm (31), a light source (32) for irradiating the diaphragm (31) with a light beam, and a photodetector (35) for receiving the light beam reflected by the diaphragm (31) and outputting a signal corresponding to vibration of the diaphragm (31).

## Description

### BACKGROUND OF THE INVENTION

### Technical Field

This invention relates to a hand-held telephone device, and it is related to the hand-held telephone device provided with a microphone in which the influences of the surroundings noise are decreased.

### Description of the Related Art

A usual hand-held telephone device mounts an electret microphone under a flapper or in a bottom edge of the body. This microphone is miniaturized along with the miniaturization of the hand-held telephone device.

When using the hand-held telephone device, the positions of the microphone and the mouth of speaking person are usually close to each other. However, in the hand-held telephone device which comprises a camera and may transmit image, a distance between the hand-held telephone device and the speaking person becomes long at the time of the image transmission. Therefore a distance between the speaking person and the microphone may become long.

However, in the conventional hand-held telephone device and such hand-held telephone device, any special idea did not exist regarding microphone to overcome the situation where the telephone device is kept away from the user. Therefore, when the telephone device was kept away from the speaking person, there was a problem that voice was hardly collected because of an influence of the surroundings noise.

However, the manipulation for transmission or reception is done while watching the display of the display unit. There was also a problem that sensitivity was declined at this time because microphone might leave a mouth. It is an object of this invention to provide a hand-held telephone device that may exclude mixing of the noise without causing a sensitivity decline even when the microphone is left the mouth of the speaking person.

### SUMMARY OF THE INVENTION

The hand-held telephone device of this invention is used in a first use state in which the telephone device is stick to a face of a speaking person and a second use state in which the telephone device is left away from the face, comprising a sensor which detects the distance from the face;
wherein the above microphone is an optical microphone that comprises
a diaphragm to vibrate by the sound pressure;
an illuminant to irradiate an optical beam to the above diaphragm;
a photodetector which receives a reflection light of the light beam irradiated in
the diaphragm and which outputs a signal which copes with the oscillation of the diaphragm;
an illuminant drive circuit to drive the illuminant to supply predetermined electric current; and
a negative feedback circuit that supplies the signal outputted by the optical detector to the illuminant drive circuit as a negative feedback signal;
and wherein the directional characteristics of the above optical microphone are controlled by varying the negative feedback signal according to the sensor signal that shows the distance between the face and the microphone.

Another hand-held telephone device of this invention is used in a first use state in which the telephone device is stick to a face of a speaking person and a second use state in which the telephone device is left away from the face, comprising a proximity sensor which outputs a detection signal to turn off during the first use state and a detection signal to turn on during the second use state;
wherein the above microphone is an optical microphone that comprises
a diaphragm to vibrate by the sound pressure;
an illuminant to irradiate an optical beam to the above diaphragm;
a photodetector which receives a reflection light of the light beam irradiated in the diaphragm and which outputs a signal which copes with the oscillation of the diaphragm;
an illuminant drive circuit to drive the illuminant to supply predetermined electric current; and
a negative feedback circuit that supplies the signal outputted by the optical detector to the illuminant drive circuit as a negative feedback signal;
and wherein the directional characteristics of the above optical microphone are controlled by toggling the negative feedback signal in two steps according to the detection signal.

### BRIEF DESCRIPTION OF DRAWINGS

Figure 1 shows a circuit diagram which shows an off site circuit of an optical microphone used for this invention.
Figure 2 shows a gradation of a directivity response pattern of an optical microphone element to use for this invention.
Figure 3 shows a structure of the optical microphone element to use for this invention.
Figure 4 shows a structure of another optical microphone element to use for this invention.
Figure 5 shows a circuit diagram that shows an outline configuration of optical microphone device to use for this invention.
Figure 6 shows a gradation figure of a directivity response pattern of the optical microphone element of figure 4.
Figure 7 shows directional characteristics pattern figure of the optical microphone element used for this invention.
Figure 8 shows an appearance figure that shows an outline configuration of the conventional hand-held telephone device.
Figure 9 shows an appearance figure that shows an outline configuration of the hand-held telephone device by this invention.
Figure 10 shows the use state of a hand-held telephone device by this invention.
Figure 11 shows a circuit diagram which shows an off site circuit of the optical microphone used by another embodiment of this invention.
In these figures, 2 is diaphragm, 3 is light source, 5 is photodetector, 7 is sound wave, 13 is light source drive circuit, 50 is optical microphone element, 55 is proximity sensor, 56 is switch, 60 is choice control unit, 100 is negative feedback circuit, and 200 is hand-held telephone device.

### DESCRIPTION OF THE PREFERED EMBODIMENTS

An optical microphone is used as a built-in microphone in a hand-held telephone device of this invention. The optical microphone can vary directional characteristics, and form a sharp directivity beam pattern in the predetermined direction. Therefore, even if a distance between the microphone and a mouth becomes longer, mixing of noise can be excluded and decline of the sensitivity can be prevented.

Next, an embodiment of the portable telephone device of this invention is explained below. First, the fundamental principle of the optical microphone and its structure are explained below.

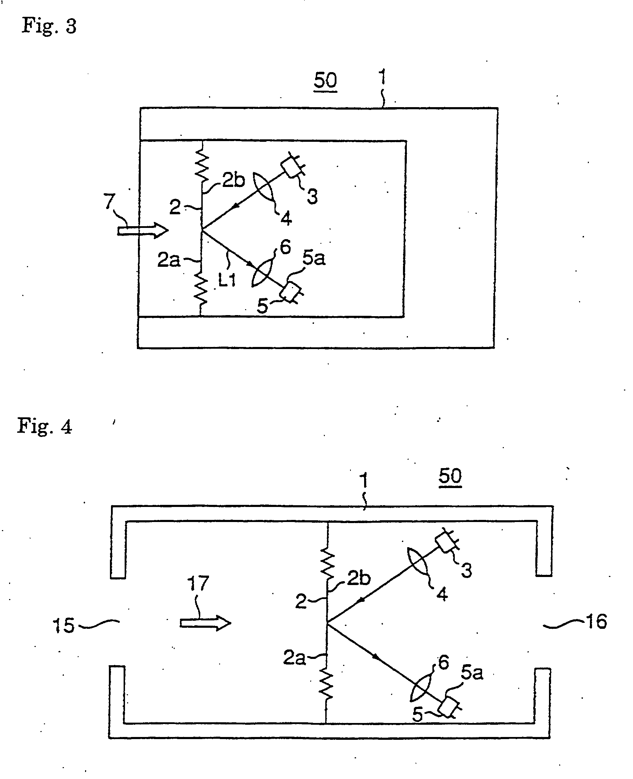

Figure 3 shows a structure of the head part of an optical microphone element 50. A diaphragm 2 which oscillates by a sound wave is provided in the microphone head 1, and a surface 2a at the side which a sound wave hits is exposed to the outside. Therefore, a sound wave 7 reaches this surface 2a, and oscillates this diaphragm 2. Inside the head 1 located in the opposite surface 2b of the diaphragm 2 against the surface 2a, a light source 3 such as LED irradiating a light beam in the surface 2b of the diaphragm 2, a lens 4 to make a light beam from this light source 3 predetermined beam shape, a photodetector 5 which receives the reflection light reflected in the surface 2b, and a lens 6 to zoom the displacement of the optical path of the reflection light caused by the oscillation of the diaphragm 2, are set up. When a sound wave 7 hits the surface 2a of the diaphragm 2 and a diaphragm 2 oscillates, the receiving position of the reflection light that enters to the receiving surface 5a of the photodetector 5 changes.

If a photodetector 5 is composed as a position sensor, an electric signal which met the oscillation of the diaphragm 2 from the irradiation location of the reflection light is taken out. This is the basic structure of the optical microphone. However, effect on a noise decrease can't be expected with the optical microphone that shows it in the figure 3 very much. This is because a diaphragm 2 also oscillates by the noise which reaches a diaphragm 2 and this is piled as a noise signal by oscillation by the usual sound wave 7.
As an optical microphone which reduces the influence of this noise and attempts effect on a noise decrease, a structure shown in figure 4 is known. In the structure shown in figure 4, the diaphragm 2, which oscillates by the sound wave 7, is provided in almost the center of the head 1. Then, on both sides of the head 1, a 1st opening 15 and a 2nd opening 16 are set up to become symmetrical location to each other. By composing it like this, a sound wave gets into the head 1 from the both openings to oscillate the diaphragm 2.

In the optical microphone element 50 shown in figure 4, when the phase and the amplitude of the sound wave from the 1st opening 15 and those of the sound wave from the 2nd opening 16 are equal, these two sound waves interfere with each other in both sides 2a and 2b of the diaphragm 2, and never oscillate the diaphragm 2. When two microphones that have equal sensitivities are arranged close and they receive the sound wave which occurred in the far range, the two microphone elements detect the sound wave equally.
Generally, a sound wave occurs from the mouth of the person in the short distance to the microphone element. In other words, most voice occurs at the short distance from this microphone element. The voice of the person of this short distance has globular field characteristics so that it may be shown by a circular curve. As for the sound wave by the noise sound which occurs in the far range has the characteristics of the plane field. Though the sound intensity of the globular wave is about the same along that spherical surface or the envelope and changes along the radius of that glob, sound intensity of the plane wave almost becomes the same in all the plane points.

As the optical microphone element shown in figure 4 can be thought to associate two microphone element, when this was put on the far range field, the sound waves which have almost the same amplitude and phase characteristics from the 1st opening 15 and the 2nd opening 16 comes in the diaphragm 2 to interfere with each other, and those influences are decreased. On the other hand, as a sound wave from the short distance field enters from the 1st opening 15 or the 2nd opening 16 non-uniformly, a sound wave from the short distance field oscillates a diaphragm 2, and it is taken out as a signal by the photodetector 5. The structure of figure 4 can provide the optical microphone element which reduces the influence of the noise more.

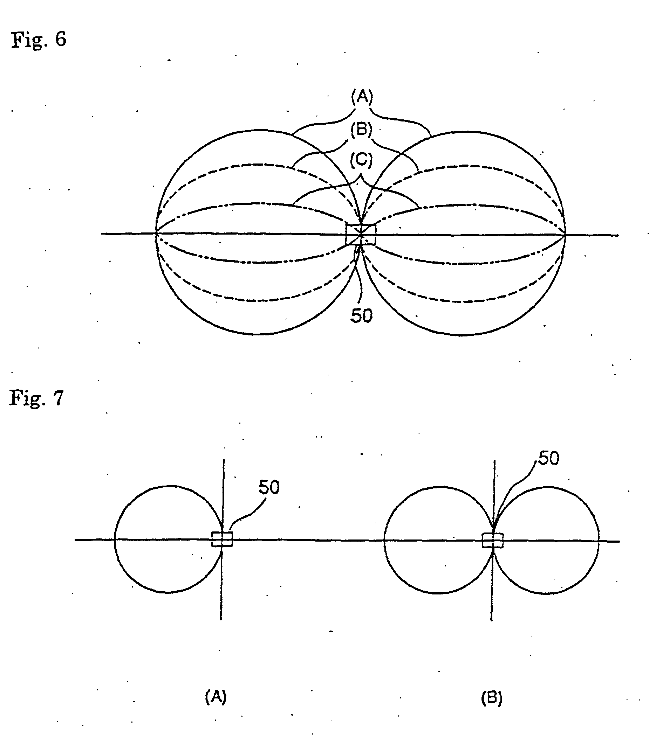

Figure 7 shows directivity response patterns of the optical microphone element shown in figure 3 and figure 4. Figure 7A shows a directivity response pattern of the optical microphone element 50 shown in figure 3. This optical microphone element 50 has an almost circular-shaped directivity response pattern, and has optimum sensitivity in the direction which is vertical to the diaphragm 2 toward the opening (the left side direction of the figure). Figure 7B shows a directivity response pattern of the optical microphone element 50 shown in figure 4. This optical microphone element 50 has almost "8" shaped directivity response pattern, and has optimum sensitivity in both directions of the openings 15 and 16.

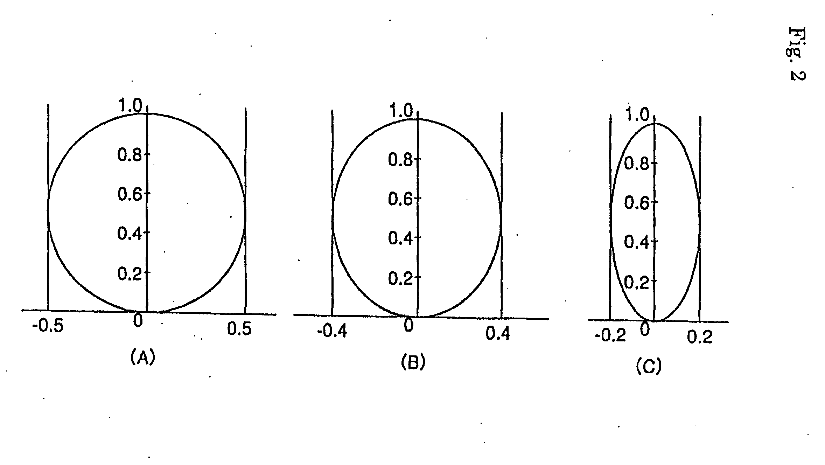

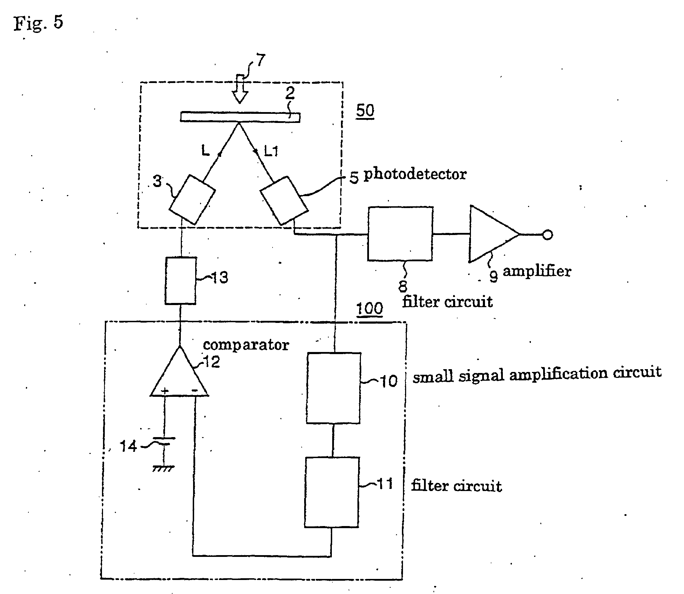

The directivity response pattern of the optical microphone element 50 shown in figure 3 and figure 4 can be stretched along the axis having optimum sensitivity as shown in figure 2 or figure 6. Also, the directivity response pattern can be narrowed along the direction which is vertical to the axis. To make the pattern of the directivity change like this, a part of the detection output from the photodetector 5 should be negatively feedbacked by using the negative feedback circuit to the light source drive circuit that drives light source 3. Figure 5 shows an outline configuration of an optical microphone device which used a feedback circuit 100 to make a beam pattern change such as figure 2 or figure 6.

Output from the photodetector 5 is taken out through the filter circuit 8, amplified by an amplifier 9, and it becomes microphone output. A filter circuit 8 is used to take out a requested signal component of the frequency range. Here, with the optical microphone device shown in figure 5, it is composed to supply a part of the output signal taken out from this photodetector 5 to the light source drive circuit 13 through the negative feedback (NFB) circuit 100 as a negative feedback signal. Light source drive circuit 13 drives this light source 3 by supplying predetermined electric current to the light source 3.

Negative feedback circuit 100 comprises a small signal amplification circuit 10, a filter circuit 11 which takes out a signal component of the requested frequency range from the output from the small signal amplification circuit 10, and a comparator 12. A norm power source 14 which provides reference voltage is connected to the non-inversion input terminal of the comparator 12. The signal taken out through the filter circuit 11 is supplied to the reverse input terminal of the comparator 12. When it is composed like this, a little output level is outputted as much as the output of the filter circuit 11 of the comparator 12 is big, and light source drive circuit 13 is actuated by this to reduce electric current supplied to the light source 3.

Only when an input signal level is less than a predetermined level, small signal amplification circuit 10 amplifies that signal, and a certain signal beyond the level is not amplified. Therefore, an output signal level doesn't change in the case the input signal level is beyond a predetermined level, and amplification degree (gain) becomes 0. When an input signal is less than a predetermined signal level, it amplifies so that amplification degree may grow big as much as a signal level is small. Furthermore, the rate of increase of the output signal toward the input signal rises as much as an input signal level is small. As an output from the photodetector 5 is in proportion to the received sound volume, the output of the small signal amplification circuit 10 is greatly amplified and outputted.

Because this output is being inputted to the reverse input terminal of the comparator 12 through the filter circuit 11, the output of the comparator 12 decreases conversely as much as small sound volume. As that result, the electric current supplied to the light source 3 is actuated so that small sound volume may make the optical output of the light source 3 decline. Id est, the sensitivity of the microphone declines as much as small sound volume. As a signal beyond the predetermined level isn't amplified, optical output isn't restricted by that signal level. Therefore the sensitivity of the microphone never declines.

When the sound which came from the axis direction which was vertical to the diaphragm and which has a volume that does not cause the sensitivity decline of the microphone is moved from the axis direction, sensitivity gradually declines along the original directivity response pattern curve. Then, when the sensitivity becomes less than a certain level, small signal amplification circuit 10 comes to have amplification degree, and the electric current control of the light source drive circuit 13 works, and the sensitivity of the microphone declines more. As this result, with the optical microphone device which has negative feedback circuit 100, the width of the directivity beam is more limited than the directivity response pattern of the sensitivity as shown in figure 2 and figure 6.

Figure 2 and Figure 6 show pattern gradations of directivity by changing the gain of negative feedback. In these figures, (A) shows the directivity response pattern when negative feedback isn't made, and almost becomes a circular directivity response pattern in this case. Next, directivity response patterns under negative feedback are shown in (B) and (C). The gain of negative feedback is small in the case of (B), and the gain of negative feedback is big in the case of (C). As shown in these figures, the gain of negative feedback is made to change by varying the amplification degree of the small signal amplification circuit 10. The directivity response pattern of the sensitivity can be stretched along the axis direction of the optimum sensitivity by this, or narrowed in the direction that is vertical to the axis. Thus, the directional characteristics of the sensitivity of the optical microphone can be changed.

The sound collector of this invention changes the directional characteristics of a selected microphone by using the optical microphone that may change the beam pattern of directivity.

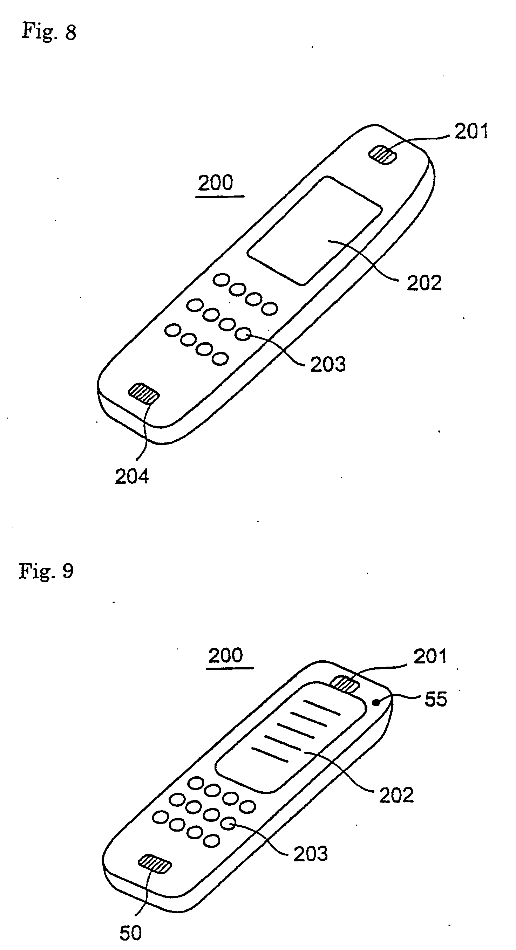

Figure 8 shows an outline composition of the usual portable telephone device. A portable telephone device 200 is provided with a speaker 201 in the top end of the body, and provided with a microphone 204 in the bottom edge. On the surface of the portable telephone device, keys 203 to input a telephone number or FAX number and a display 202 are held. Figure 9 shows an example of the portable telephone device of this invention. This portable telephone device uses aforementioned optical microphone element 50 in place of the conventional microphone 204.

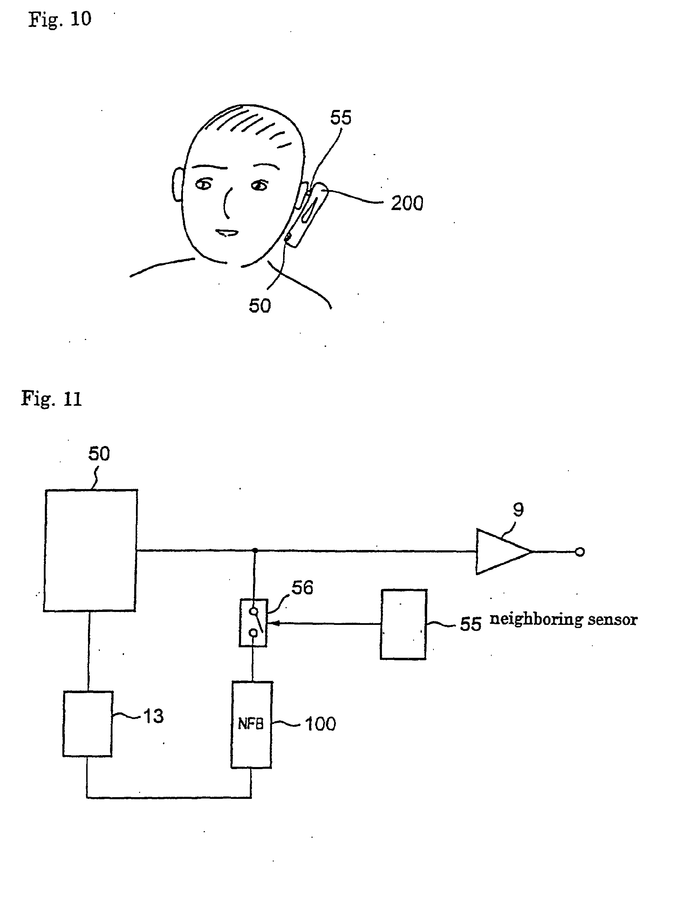

A neighboring sensor 55 to detect the distance between the microphone element 50 and a speaking person is set up in a predetermined position of the portable telephone device 200. Figure 10 shows how to use the portable telephone device of this invention. In usual usage, hand-held telephone device 200 sticks to the speaking person. In this usage, a proximity sensor 55 recognizes the distance between the portable telephone and the speaking person is short.

When a portable telephone device 200 is kept away from the mouth of the speaking person and operated to transmit or receive data while referring to the display 202, the portable telephone device 200 is kept away from the mouth of speaking person. In this case, a neighboring sensor 55 recognizes that a distance between the speaker and the portable telephone device 200 is long. Because it is common knowledge, detailed explanation is omitted as for the concrete method of the distance recognition by the neighboring sensor 55.

In this invention, the neighboring sensor 55 installed in the portable telephone recognizes a distance between the speaker and the portable telephone device, and the directional character of this optical microphone element 50 is controlled by varying the negative feedback signal of the optical microphone element 50 based on the recognition by the neighboring sensor 55.

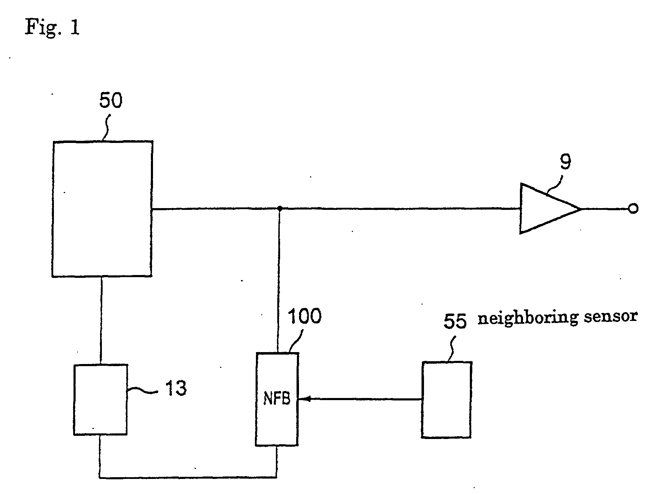

Figure 1 shows a circuit to vary the directivity of the microphone in the portable telephone device of this invention.

The gain of negative feedback of the negative feedback circuit 100 is changed according to the sensor signal from the neighboring sensor 55. In other words, when the neighboring sensor 55 recognizes that a distance between the portable telephone device 200 and the mouth of the speaking person becomes long, the gain of negative feedback of the negative feedback circuit 100 increases according to the output signal of the neighboring sensor 55 to narrow the directivity pattern of the optical microphone element 50, and to receive a voice from the mouth of the speaking person in good sensitivity.

In the negative feedback circuit 100, the gain of negative feedback may increase by enlarging the amplification degree of small signal amplification circuit 10 shown in figure 5. Figure 11 shows another circuit used for the portable telephone device of this invention. In the telephone device, switch 56 is provided to connect and to disconnect the negative feedback circuit 100 based on the output of the neighboring sensor 55.

When the neighboring sensor 55 recognizes that the telephone device is near the speaking person, switch 56 is turned off, and negative feedback by the negative feedback circuit 100 is suspended and it becomes usual receiving condition. When a neighboring sensor 55 recognizes that the telephone device is far from the speaking person, switch 56 is turned on, and the negative feedback circuit 100 works. The directivity pattern of the optical microphone element 50 becomes sharp as shown in Figure 2 or Figure 6 and a telephone call with clear voice becomes possible even if the telephone device is far from the speaking person because the photographic sensitivity may be raised toward the speaking person. Moreover, the influences of the surrounding noise can be reduced.

As explained above, in this invention, optical microphone is used as the microphone for the portable telephone device, The directivity of this optical microphone is made to change based on the use condition of the portable telephone. Therefore, the portable telephone device may achieve a good receiving character regardless of the use condition.

## Claims

1. A hand-held telephone device used in a first use state in which the telephone device is stick to a face of a speaking person and a second use state in which the telephone device is left away from the face, comprising a sensor which detects the distance from the face;
wherein the above microphone is an optical microphone that comprises:
a diaphragm to vibrate by the sound pressure;
an illuminant to irradiate an optical beam to the above diaphragm;
a photodetector which receives a reflection light of the light beam irradiated in the diaphragm and which outputs a signal which copes with the oscillation of the diaphragm;
an illuminant drive circuit to drive the illuminant to supply predetermined electric current; and
a negative feedback circuit that supplies the signal outputted by the optical detector to the illuminant drive circuit as a negative feedback signal; and
wherein the directional characteristics of the above optical microphone are controlled by varying the negative feedback signal according to the sensor signal that shows the distance between the face and the microphone.

2. A hand-held telephone device used in a first use state in which the telephone device is stick to a face of a speaking person and a second use state in which the telephone device is left away from the face, comprising a proximity sensor which outputs a detection signal to turn off during the first use state and a detection signal to turn on during the second use state;
wherein the above microphone is an optical microphone that comprises
a diaphragm to vibrate by the sound pressure;
an illuminant to irradiate an optical beam to the above diaphragm;
a photodetector which receives a reflection light of the light beam irradiated in the diaphragm and which outputs a signal which copes with the oscillation of the diaphragm;
an illuminant drive circuit to drive the illuminant to supply predetermined electric current; and
a negative feedback circuit that supplies the signal outputted by the optical detector to the illuminant drive circuit as a negative feedback signal; and
wherein the directional characteristics of the above optical microphone are controlled by toggling the negative feedback signal in two steps according to the detection signal.
